(19) Europäisches Patentamt
European Patent Office
Office européen des brevets

(11) **EP 3 299 343 B1**

(12) **EUROPEAN PATENT SPECIFICATION**

(45) Date of publication and mention
of the grant of the patent:
**24.02.2021 Bulletin 2021/08**

(21) Application number: **16796268.7**

(22) Date of filing: **22.04.2016**

(51) Int Cl.:
***B29C 64/40*** (2017.01)   ***B29C 67/00*** (2017.01)
***C08J 11/04*** (2006.01)   ***B29B 17/00*** (2006.01)
***C08L 67/02*** (2006.01)

(86) International application number:
**PCT/JP2016/062812**

(87) International publication number:
**WO 2016/185874 (24.11.2016 Gazette 2016/47)**

(54) **METHOD FOR RECOVERING WATER-SOLUBLE POLYESTER RESIN FROM DISSOLVED SUPPORT MATERIAL EFFLUENT**

VERFAHREN ZUR RÜCKGEWINNUNG VON WASSERLÖSLICHEM POLYESTERHARZ AUS GELÖSTEM TRÄGERMATERIALABFLUSS

PROCÉDÉ DE RÉCUPÉRATION DE RÉSINE DE POLYESTER HYDROSOLUBLE À PARTIR D'UN EFFLUENT DE MATÉRIAU DE SUPPORT DISSOUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2015 JP 2015101644**

(43) Date of publication of application:
**28.03.2018 Bulletin 2018/13**

(73) Proprietor: **Kao Corporation**
**Chuo-Ku**
**Tokyo 103-8210 (JP)**

(72) Inventors:
• **KIMURA, Takuma**
**Wakayama-shi**
**Wakayama 640-8580 (JP)**

• **YOSHIMURA, Tadanori**
**Wakayama-shi**
**Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
WO-A1-2015/070165   JP-A- H01 502 244
JP-A- 2011 050 815   JP-A- 2011 143 615
JP-A- 2014 083 744   JP-A- 2014 504 971

## Description

TECHNICAL FIELD

The present invention relates to a method for recovering a water-soluble polyester resin as a component of the support material dissolved and/or dispersed in an effluent that is generated when manufacturing the three-dimensional object with a fused deposition modeling type 3D printer.

The 3D printer is one type of rapid prototyping, and it is a three-dimensional printer for modeling a three-dimensional object based on 3D data such as 3D CAD and 3D CG. Systems of 3D printing have been known, such as a fused deposition modeling system (hereinafter referred to as an FDM system), an inkjet ultraviolet curing system, a stereolithography system, and a selective laser sintering system. Among these systems, the FDM system is a modeling system of heat-melting, extruding, and laminating polymer filaments to obtain a three-dimensional object, and the FDM system does not use a reaction of the material unlike other systems. Accordingly, a 3D printer of an FDM system is small and inexpensive, and has become popular in recent years as an apparatus with less post-processing. In order to model a three-dimensional object having a more complex shape in a FDM system, a modeling material constituting the three-dimensional object and a support material for supporting a three-dimensional structure of the modeling material are laminated to obtain a precursor of the three-dimensional object, and then the support material is removed from the precursor of the three-dimensional object to obtain the target three-dimensional object.

An example of the technique of removing the support material from the precursor of the three-dimensional object is a method of using a compound having high affinity with moisture, such as polyvinyl alcohol, polyvinylpyrrolidone, and poly(2-ethyl-2-oxazoline), as the material for the support material, and soaking the precursor of the three-dimensional object in water to remove the support material (for example, JP-T-2002-516346) . The method utilizes that polyvinyl alcohol is dissolved in water.

An example of other techniques for removing a support material from a precursor of a three-dimensional object is a method that employs a methacrylic acid copolymer as the support material and includes soaking the precursor of the three-dimensional object in a strong alkaline aqueous solution to remove the support (for example, JP-T-2008-507619). This technique utilized the nature that carboxylic acid in the methacrylic acid copolymer is neutralized with an alkali and dissolved in the strong alkaline aqueous solution.

WO2015070165 (A1) describes a method of creating an object, comprising: printing a 3 -dimensional object with a printer, wherein the object is printed along with a removable support structure, wherein the removable support structure is configured to support at least a portion of the object while the object dries; and removing the removable support structure by applying an electrolytic solution to the removable support structure. JP2014083744 (A) describes a developing liquid composition comprising (a) a water-soluble organic solvent in an amount of from 1 wt.% to 20 wt.%, (b) an alkali metal hydroxide in an amount of from 0.5 wt.% to 20 wt.%, (c) an organic alkali agent in an amount of from 0.2 wt.% to 20 wt.%, (d) a surfactant in an amount of 0.1 wt.% to 20 wt. %, and water, wherein (b) / (c), a weight ratio of a content of (b) to a content of (c), is from 1/4 to 1/0.4. JP2014504971 (A) relates to a system and method for reusing surplus material generated by an additive manufacturing system in the process of manufacturing a 3-dimensional (3D) object. Surplus material removed from deposited layers and purged material used for printing head maintenance are transferred to back to the printing system to be deposited within subsequent layers. JP2011143615 (A) relates to a method for manufacturing a three-dimensional structure which produces an extremely small amount of a waste and polluted waste water by-product to reduce an environmental load, and makes the three-dimensional structure at a low cost in a short plate-making time. JPH01502244 (A) relates to a waste-treatment process for water-based printing operations which employ inks comprising aqueous dispersions of polyester or polyesteramide materials containing water solubilizing sulfo-salt groups, comprising providing in an agitated vessel a substantially homogenous system of water and multi-valent cation, adding the waste aqueous dispersion of polyester or polyesteramide material from the printing operation to the vessel, allowing ion interchange and insolubilization of the material in the water to occur, and physically separating the water from the insolubilized material. JP2011050815 (A) relates to a water treatment apparatus for reducing the generation amount of sludge with water containing a multivalent amino carboxylic acid compound and a polyester resin as a treatment object.

SUMMARY OF THE INVENTION

The method for recovering a water-soluble polyester resin of the present invention is a method for recovering a water-soluble polyester resin contained in a support material from an effluent in which the support material is dissolved and/or dispersed that is generated when the precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling. The method for recovering a water-soluble polyester resin of the present invention includes a metal salt addition step of adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more; a water-soluble polyester resin precipitation step of subjecting the effluent containing the metal salt to a heat treatment at 30°C or more after the metal salt addition step to precipitate a water-soluble polyester resin; and a water-soluble polyester resin recovery step of separating and recovering the precipitated water-soluble polyester resin from the effluent after the water-soluble polyester resin precipitation step. In the method for recovering a water-soluble polyester resin of the present invention, the amount of the metal salt added in the metal salt addition step is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added in the metal salt addition step is 100 parts by mass or more and 1,000 parts by mass or less to 100 parts by mass of the water-soluble polyester resin dissolved and/or dispersed in the effluent when the metal salt is at least one metal salt selected from the group consisting of a sodium salt and a potassium salt, wherein the water-soluble polyester resin has an aromatic dicarboxylic acid monomer unit A with a sulfonate group, and the content of the sulfonate group in the water-soluble polyester resin is 0.5 mmol/g or more.

The system for recovering a water-soluble polyester resin of the present invention is a system for recovering a water-soluble polyester resin contained in a support material from an effluent in which the support material is dissolved and/or dispersed that is generated when a precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling. The system for recovering a water-soluble polyester resin of the present invention includes a metal salt addition means for adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more; a water-soluble polyester resin precipitation means for subjecting the effluent to which the metal salt is added by the metal salt addition means to a heat treatment at 30°C or more to precipitate a water-soluble polyester resin; and a water-soluble polyester resin recovery means for separating and recovering the water-soluble polyester resin precipitated by the water-soluble polyester resin precipitation means from the effluent. In the system for recovering a water-soluble polyester resin of the present invention, the amount of the metal salt added by the metal salt addition means is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added by the metal salt addition means is 100 parts by mass or more and 1,000 parts by mass or less to 100 parts by mass of the water-soluble polyester resin dissolved and/or dispersed in the effluent when the metal salt is at least one metal salt selected from the group consisting of a sodium salt and a potassium salt, wherein the water-soluble polyester resin has an aromatic dicarboxylic acid monomer unit A with a sulfonate group, and the content of the sulfonate group in the water-soluble polyester resin is 0.5 mmol/g or more.

DETAILED DESCRIPTION OF THE INVENTION

If a compound having high affinity with moisture, such as polyvinyl alcohol, is used as the material for the support material, the material for the support material absorbs moisture in air when exposed to high humidity. If the material for the support material containing moisture is heated/melted/printed/laminated with an FDM type 3D printer, the material foams due to evaporation of moisture at high temperature, and the precision of the three-dimensional object may be significantly lost.

On the other hand, if the methacrylic acid copolymer is used as the material for the support material, occurrence of the above-described problem when polyvinyl alcohol or the like is used as the material for the support material can be reduced because the methacrylic acid copolymer has moisture absorption resistance.

However, because it is difficult to remove the support material containing the methacrylic acid copolymer from the precursor of the three-dimensional object by using water, it is necessary to remove the support material by using a strong alkaline aqueous solution as described above. A strong alkaline aqueous solution is highly dangerous to human bodies, and it is required to be handled with care. In addition, it is necessary in Japan, Europe, etc. to dispose of the effluent generated when the support material containing the methacrylic acid copolymer is removed by using the strong alkaline aqueous solution as an industrial waste, and such disposal takes time and costs. In the United States, etc., the effluent can be drained after being neutralized and/or diluted. However, the methacrylic acid copolymer is still dissolved in the effluent, and a considerable load is placed on the environment.

In view of the above-described situation, the present invention provides a method for recovering a water-soluble polyester resin and a system for recovering a water-soluble polyester resin that are capable of safely recovering the water-soluble polyester resin from an effluent generated in a manufacturing process of a three-dimensional object by fused deposition modeling using a material for a support material containing a water-soluble polyester resin and having excellent moisture absorption resistance, and are capable of reducing the environmental load.

The method for recovering a water-soluble polyester resin of the present invention is a method for recovering a water-soluble polyester resin contained in a support material from an effluent in which the support material is dissolved and/or dispersed that is generated when the precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling. The method for recovering a water-soluble polyester resin of the present invention includes a metal salt addition step of adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more; a water-soluble polyester resin precipitation step of subjecting the effluent containing the metal salt to a heat treatment at 30°C or more after the metal salt addition step to precipitate a water-soluble polyester resin; and a water-soluble polyester resin recovery step of separating and recovering the precipitated water-soluble polyester resin from the effluent after the water-soluble polyester resin precipitation step. In the method for recovering a water-soluble polyester resin of the present invention, the amount of the metal salt added in the metal salt addition step is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added in the metal salt addition step is 100 parts by mass or more and 1,000 parts by mass or less to 100 parts by mass of the water-soluble polyester resin dissolved and/or dispersed in the effluent when the metal salt is at least one metal salt selected from the group consisting of a sodium salt and a potassium salt, wherein the water-soluble polyester resin has an aromatic dicarboxylic acid monomer unit A with a sulfonate group, and the content of the sulfonate group in the water-soluble polyester resin is 0.5 mmol/g or more.

The system for recovering a water-soluble polyester resin of the present invention is a system for recovering a water-soluble polyester resin contained in a support material from an effluent in which the support material is dissolved and/or dispersed that is generated when a precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling. The system for recovering a water-soluble polyester resin of the present invention includes a metal salt addition means for adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more; a water-soluble polyester resin precipitation means for subjecting the effluent to which the metal salt is added by the metal salt addition means to a heat treatment at 30°C or more to precipitate a water-soluble polyester resin; and a water-soluble polyester resin recovery means for separating and recovering the water-soluble polyester resin precipitated by the water-soluble polyester resin precipitation means from the effluent. In the system for recovering a water-soluble polyester resin of the present invention, the amount of the metal salt added by the metal salt addition means is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added by the metal salt addition means is 100 parts by mass or more and 1,000 parts by mass or less to 100 parts by mass of the water-soluble polyester resin dissolved and/or dispersed in the effluent when the metal salt is at least one metal salt selected from the group consisting of a sodium salt and a potassium salt, wherein the water-soluble polyester resin has an aromatic dicarboxylic acid monomer unit A with a sulfonate group, and the content of the sulfonate group in the water-soluble polyester resin is 0.5 mmol/g or more.

The present invention can provide a method for recovering a water-soluble polyester resin and a system for recovering a water-soluble polyester resin that are capable of safely recovering the water-soluble polyester resin from an effluent generated in a manufacturing process of a three-dimensional object by fused deposition modeling using a material for a support material containing a water-soluble polyester resin and having excellent moisture absorption resistance, and are capable of reducing the environmental load.

If the effluent containing a water-soluble polyester resin is drained to sewerage, the water-soluble polyester resin may precipitate in the sewerage piping or the like. However, in the present invention, since the water-soluble polyester resin is recovered, precipitation of the water-soluble polyester resin in the piping or the like is prevented.

One embodiment of the present invention will be described below.

<Method for recovering water-soluble polyester resin>

The method for recovering a water-soluble polyester resin of the present embodiment is a method for recovering a water-soluble polyester resin contained in a support material from an effluent in which the support material is dissolved and/or dispersed that is generated when a precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling. The method for recovering a water-soluble polyester resin of the present embodiment includes a metal salt addition step of adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more; a water-soluble polyester resin precipitation step of subjecting the effluent containing the metal salt to a heat treatment at 30°C or more after the metal salt addition step to precipitate a water-soluble polyester resin; and a water-soluble polyester resin recovery step of separating and recovering the precipitated water-soluble polyester resin from the effluent after the water-soluble polyester resin precipitation step. In the method for recovering a water-soluble polyester resin of the present embodiment, the amount of the metal salt added in the metal salt addition step is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added in the metal salt addition step is 100 parts by mass or more and 1,000 parts by mass or less to 100 parts by mass of the water-soluble polyester resin dissolved and/or dispersed in the effluent when the metal salt is at least one metal salt selected from the group consisting of a sodium salt and a potassium salt, wherein the water-soluble polyester resin has an aromatic dicarboxylic acid monomer unit A with a sulfonate group, and the content of the sulfonate group in the water-soluble polyester resin is 0.5 mmol/g or more.

The support material has moisture absorption resistance because it contains a water-soluble polyester resin. However, the support material is excellent in safety because it can be removed from the precursor of the three-dimensional object without use of a strong alkaline aqueous solution.

The amount of the metal salt added in the metal salt addition step differs between the case where the metal salt is at least one metal salt selected from the group consisting of a calcium salt, a magnesium salt, an aluminum salt, and an iron salt and the case where the metal salt is at least one metal salt selected from the group consisting of a sodium salt and a potassium salt. The reason why the amount of the metal salt added differs is not certain, but can be considered as follows.

Because the hydrophilic group of the water-soluble polyester resin in the effluent strongly attracts a water molecule, hydrated water serves as a steric hindrance to prevent aggregation of the water-soluble polyester resin. Thus, the water-soluble polyester resin is dissolved and/or dispersed in the effluent. If a polyvalent metal salt that is at least one metal salt selected from the group consisting of a calcium salt, a magnesium salt, an aluminum salt, and an iron salt is added to the effluent, ion cross-linking by an ionic bond occurs between the polyvalent metal salt and the water-soluble polyester resin dissolved and/or dispersed in the effluent. As a result, the water-soluble polyester resin precipitates. On the other hand, if a monovalent metal salt that is at least one metal salt selected from the group consisting of a sodium salt and a potassium salt is added to the effluent, an ion originated from the monovalent metal salt attracts a water molecule more strongly than the hydrophilic group of the water-soluble polyester resin, resulting in that the water-soluble polyester resin dissolved and/or dispersed in the effluent loses hydrated water and aggregates. As a result, the water-soluble polyester resin precipitates . As described above, the amount of the metal salt added differs between the case where the metal salt is at least one metal salt selected from the group consisting of a calcium salt, a magnesium salt, an aluminum salt, and an iron salt and the case where the metal salt is at least one metal salt selected from the group consisting of a sodium salt and a potassium salt because the principle of precipitation of the water-soluble polyester resin differs between the case of the polyvalent metal salt and the case of the monovalent metal salt.

According to the method for recovering a water-soluble polyester resin, the water-soluble polyester resin can be safely recovered from an effluent generated in a manufacturing process of a three-dimensional object by fused deposition modeling using a material for a support material containing a water-soluble polyester resin and having excellent moisture absorption resistance, and the environmental load can be reduced.

[Support material]

The support material contains a water-soluble polyester resin from the viewpoints of the moisture absorption resistance, molding properties by a 3D printer, recoverability from the effluent, and safety in handling the aqueous cleaning agent and the effluent. From the same viewpoints, the water-soluble polyester resin is preferably a water-soluble polyester resin having an aromatic dicarboxylic acid monomer unit A with a sulfonate group, a dicarboxylic acid monomer unit B without a sulfonate group, and a diol monomer unit, in which the rate of the aromatic dicarboxylic acid monomer unit A in the total amount of all dicarboxylic acid monomer units is 10 mol% or more and 50 mol% or less.

[Water-soluble polyester resin]

(Aromatic dicarboxylic acid monomer unit A)

The water-soluble polyester resin has an aromatic dicarboxylic acid monomer unit with a sulfonate group. Herein, the aromatic dicarboxylic acid monomer unit with a sulfonate group is also called the aromatic dicarboxylic acid monomer unit A. Further, the aromatic dicarboxylic acid for deriving the aromatic dicarboxylic acid monomer unit A is also called an aromatic dicarboxylic acid A.

From the viewpoints of solubility in the aqueous cleaning agent and the hygroscopicity resistance, the aromatic dicarboxylic acid A is preferably at least one aromatic dicarboxylic acid selected from the group consisting of 5-sulfoisophthalic acid, 2-sulfoterephthalic acid, and 4-sulfo-2,6-naphthalenedicarboxylic acid; more preferably at least one aromatic dicarboxylic acid selected from the group consisting of 5-sulfoisophthalic acid and 2-sulfoterephthalic acid; and further preferably 5-sulfoisophthalic acid.

From the viewpoint of the solubility in the aqueous cleaning agent, the rate of the aromatic dicarboxylic acid monomer unit A in the total amount of all dicarboxylic acid monomer units in the water-soluble polyester resin is preferably 10 mol% or more, more preferably 15 mol% or more, further preferably 18 mol% or more, and even more preferably 20 mol% or more; and from the viewpoint of hygroscopicity resistance, the rate is preferably 50 mol% or less, more preferably 40 mol% or less, further preferably 30 mol% or less, and even more preferably 25 mol% or less. Herein, the composition of the dicarboxylic acid monomer unit in the polyester resin is measured by the method described in the examples.

From the viewpoint of the solubility in the aqueous cleaning agent, the content of the aromatic dicarboxylic acid monomer unit A in the water-soluble polyester resin is preferably 5 mol% or more, more preferably 7.5 mol% or more, further preferably 9 mol% or more, and even more preferably 10 mol% or more; and from the viewpoint of the hygroscopicity resistance, the content is preferably 25 mol% or less, more preferably 20 mol% or less, further preferably 15 mol% or less, and even more preferably 13 mol% or less.

Examples of a counter ion of the sulfonic acid group constituting the sulfonate group include at least one inorganic cation selected from the group consisting of a lithium ion, a sodium ion, a potassium ion, a magnesium ion, and an ammonium ion and at least one organic cation selected from the group consisting of a monoethanol ammonium ion, a diethanol ammonium ion, and a triethanol ammonium ion; however, from the viewpoint of the solubility in the aqueous cleaning agent, the counter ion is preferably at least one cation selected from the group consisting of a sodium ion, a potassium ion, a magnesium ion, and an ammonium ion, more preferably at least one cation selected from the group consisting of a sodium ion and a potassium ion, and further preferably a sodium ion.

From the viewpoint of the solubility in the aqueous cleaning agent, the content of the sulfonate group in the water-soluble polyester resin is 0.5 mmol/g or more, preferably 0.6 mmol/g or more, more preferably 0.7 mmol/g or more, further preferably 0.8 mmol/g or more, and even more preferably 0.9 mmol/g or more; and from the viewpoint of the hygroscopicity resistance, the content is preferably 3.0 mmol/g or less, more preferably 2.0 mmol/g or less, further preferably 1.5 mmol/g or less, even more preferably 1.3 mmol/g or less, and even more preferably 1.2 mmol/g or less. Herein, the content of the sulfonate group is measured by the method described in the examples.

(Dicarboxylic acid monomer unit B)

The water-soluble polyester resin has a dicarboxylic acid monomer unit without a sulfonate group. Herein, the dicarboxylic acid monomer unit without a sulfonate group is also called the dicarboxylic acid monomer unit B. Further, the dicarboxylic acid for deriving the dicarboxylic acid monomer unit B is also called a dicarboxylic acid B. The dicarboxylic acid B does not have a sulfonate group.

From the viewpoints of solubility in the aqueous cleaning agent, the hygroscopicity resistance, and the heat resistance required for modeling by a 3D printer, the dicarboxylic acid B is preferably at least one dicarboxylic acid selected from the group consisting of an aromatic dicarboxylic acid and an alicyclic dicarboxylic acid. Among these dicarboxylic acids, from the same viewpoints, the dicarboxylic acid B is more preferably at least one dicarboxylic acid selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid; and further preferably at least one dicarboxylic acid selected from the group consisting of terephthalic acid, 2,5-furandicarboxylic acid, and 2,6-naphthalenedicarboxylic acid.

From the viewpoint of the hygroscopicity resistance, the rate of the dicarboxylic acid monomer unit B in the total amount of all dicarboxylic acid monomer units in the water-soluble polyester resin is preferably 50 mol% or more, more preferably 60 mol% or more, further preferably 70 mol% or more, and even more preferably 75 mol% or more; and from the viewpoint of the solubility in the aqueous cleaning agent, the rate is preferably 90 mol% or less, more preferably 85 mol% or less, further preferably 82 mol% or less, and even more preferably 80 mol% or less.

From the viewpoint of the hygroscopicity resistance, the content of the dicarboxylic acid monomer unit B in the water-soluble polyester resin is preferably 25 mol% or more, more preferably 30 mol% or more, further preferably 35 mol% or more, and even more preferably 38 mol% or more; and from the viewpoint of the solubility in the aqueous cleaning agent, the content is preferably 45 mol% or less, more preferably 43 mol% or less, further preferably 41 mol% or less, and even more preferably 40 mol% or less.

From the viewpoints of solubility in the aqueous cleaning agent, the hygroscopicity resistance, and the heat resistance required for modeling by a 3D printer, the rate of the total amount of the aromatic dicarboxylic acid monomer unit A and the dicarboxylic acid monomer unit B in the total amount of all dicarboxylic acid monomer units in the water-soluble polyester resin is preferably 80 mol% or more, more preferably 90 mol% or more, further preferably 95 mol% or more, even more preferably 98 mol% or more, even more preferably substantially 100% by mass, and even more preferably 100% by mass. Herein, "substantially 100% by mass" refers to a condition of inevitably containing a trace amount of impurities.

From the viewpoints of solubility in the aqueous cleaning agent, the hygroscopicity resistance, and the heat resistance required for modeling by a 3D printer, the molar ratio of the aromatic dicarboxylic acid monomer unit A to the dicarboxylic acid monomer unit B (aromatic dicarboxylic acid monomer unit A/dicarboxylic acid monomer unit B) is preferably 10/90 or more, more preferably 15/85 or more, further preferably 18/82 or more, and even more preferably 20/80 or more; and from the same viewpoints, the molar ratio is preferably 50/50 or less, more preferably 40/60 or less, further preferably 30/70 or less, and even more preferably 25/75 or less.

(Diol monomer unit)

The water-soluble polyester resin has a diol monomer unit. The diol for deriving the diol monomer unit is also called a diol C.

The diol C is not particularly limited, and an aliphatic diol, an aromatic diol, and the like can be used. However, an aliphatic diol is preferable from the viewpoint of manufacturing cost of the polyester resin.

From the viewpoints of solubility in the aqueous cleaning agent, the hygroscopicity resistance, and the heat resistance required for modeling by a 3D printer, the number of carbon atoms of the diol C is preferably 2 or more; and from the same viewpoints, the number of carbon atoms is preferably 20 or less and more preferably 15 or less.

The aliphatic diol is at least one aliphatic diol selected from the group consisting of a chain diol and a cyclic diol; however, a chain diol is preferable from the viewpoints of solubility in the aqueous cleaning agent, the hygroscopicity resistance, and the toughness (strength) required for modeling by a 3D printer.

From the viewpoints of solubility in the aqueous cleaning agent, the hygroscopicity resistance, and the heat resistance required for modeling by a 3D printer, the number of carbon atoms of the chain diol is preferably 2 or more; and from the same viewpoints, the number of carbon atoms is preferably 6 or less, more preferably 4 or less, and further preferably 3 or less.

From the viewpoints of solubility in the aqueous cleaning agent, the hygroscopicity resistance, and the heat resistance required for modeling by a 3D printer, the number of carbon atoms of the cyclic diol is preferably 6 or more; and from the same viewpoints, the number of carbon atoms is preferably 30 or less, more preferably 25 or less, further preferably 20 or less, even more preferably 15 or less, even more preferably 10 or less, and even more preferably 8 or less.

The diol C may have ether oxygen. From the viewpoints of solubility in the aqueous cleaning agent, the hygroscopicity resistance, and the heat resistance required for modeling by a 3D printer, the number of ether oxygen atoms when the diol C is a chain aliphatic diol is preferably 1 or less; and from the same viewpoints, the number of ether oxygen atoms when the diol C is an alicyclic diol is preferably 2 or less.

From the viewpoints of solubility in the aqueous cleaning agent, the hygroscopicity resistance, and the heat resistance required for modeling by a 3D printer, the chain diol is preferably at least one chain diol selected from the group consisting of ethylene glycol, 1,2-propanediol, 1,3-propanediol, diethylene glycol, and dipropylene glycol, and is more preferably at least one chain diol selected from the group consisting of ethylene glycol, 1,2-propanediol, and 1,3-propanediol. From the viewpoints of solubility in the aqueous cleaning agent, the hygroscopicity resistance, and the heat resistance required for modeling by a 3D printer, the cyclic diol is preferably at least one cyclic diol selected from the group consisting of 1,4-cyclohexanedimethanol, hydrogenated bisphenol A, isosorbide, bisphenoxyethanolfluorene, bisphenolfluorene, and biscresolfluorene.

From the viewpoints of solubility in the aqueous cleaning agent, the hygroscopicity resistance, and the heat resistance required for modeling by a 3D printer, the rate of the total amount of ethylene glycol, 1,2-propanediol, 1,3-propanediol, diethylene glycol, dipropylene glycol, 1,4-cyclohexanedimethanol, hydrogenated bisphenol A, isosorbide, bisphenoxyethanolfluorene, bisphenolfluorene, and biscresolfluorene in the total amount of all diol monomer units in the water-soluble polyester resin when the diol C is at least one diol selected from the group consisting of ethylene glycol, 1,2-propanediol, 1,3-propanediol, diethylene glycol, dipropylene glycol, 1,4-cyclohexanedimethanol, hydrogenated bisphenol A, and isosorbide is preferably 80 mol% or more, more preferably 90 mol% or more, further preferably 95 mol% or more, and even more preferably 98 mol% or more, even more preferably substantially 100% by mass, and even more preferably 100% by mass. Herein, the composition of the diol monomer unit in the polyester resin is measured by the method described in the examples.

From the viewpoint of improving toughness required for the material for the support material, the weight average molecular weight of the water-soluble polyester resin is preferably 3, 000 or more, more preferably 8, 000 or more, further preferably 10,000 or more, even more preferably 20,000 or more, even more preferably 30,000 or more, and even more preferably 40,000 or more; from the viewpoint of modeling properties by a 3D printer, the weight average molecular weight is preferably 80,000 or less, more preferably 70,000 or less, further preferably 60,000 or less, even more preferably 50,000 or less; and from the viewpoint of the solubility in the aqueous cleaning agent, the weight average molecular weight is preferably 60,000 or less, more preferably 50,000 or less, and further preferably 40,000 or less. Herein, the weight average molecular weight is measured by the method described in the examples.

From the viewpoint of modeling properties by a 3D printer, the glass transition temperature of the water-soluble polyester resin is preferably 50°C or higher, more preferably 60°C or higher, further preferably 70°C or higher, and even more preferably 80°C or higher; and from the same viewpoint, the glass transition temperature is preferably 180°C or lower, more preferably 160°C or lower, further preferably 140°C or lower, and even more preferably 120°C or lower. Herein, the glass transition temperature is measured by the method described in the examples.

The water-soluble polyester resin may have monomer units other than the aromatic dicarboxylic acid monomer unit A, the dicarboxylic acid monomer unit B, and the diol monomer unit as long as the effects of the present embodiment are not deteriorated.

The method for manufacturing the water-soluble polyester resin is not particularly limited, and a conventionally known method for manufacturing a polyester resin can be adopted.

The content of the water-soluble polyester resin in the support material can be adjusted in a range where the effects of the present embodiment are not deteriorated; however, from the viewpoints of the solubility in the aqueous cleaning agent, the hygroscopicity resistance, the heat resistance required for modeling by a 3D printer, and the recoverability from the effluent, the content is preferably 30% by mass or more, more preferably 50% by mass or more, further preferably 60% by mass or more, even more preferably 70% by mass or more, even more preferably 80% by mass or more, even more preferably 90% by mass or more, even more preferably 95% by mass or more, even more preferably substantially 100% by mass, and even more preferably 100% by mass.

From the viewpoint of the modeling properties by a 3D printer, the glass transition temperature of the support material is preferably 50°C or higher, more preferably 60°C or higher, further preferably 70°C or higher, and even more preferably 80°C or higher; and from the same viewpoint, the glass transition temperature is preferably 180°C or lower, more preferably 160°C or lower, further preferably 140°C or lower, and even more preferably 120°C or lower.

The support material may contain polymers other than the polyester resin to improve physical properties of the support material in a range where the effects of the present embodiment are not deteriorated. Examples of the polymers include water-soluble polymers such as polyvinyl alcohol, polyethylene glycol, poly (ethylene glycol/propylene glycol), carboxymethyl cellulose, and starch; hydrophobic polymers such as polymethyl methacrylate; thermoplastic elastomers formed of an elastomer such as polyetherester consisting of hard and soft segments, polyetheresteramide, and polyurethane, a block copolymer of an ionic monomer, a water-soluble non-ionic monomer, and a hydrophobic monomer, styrene-butadiene, and alkyl methacrylate (1 to 18 carbon atoms)-alkyl acrylate (1 to 18 carbon atoms); graft polymers such as a graft polymer in which polymers such as polyacrylic acid and N,N-dimethylacrylamide are grafted to hydrophobic rubber, and a graft polymer in which polyoxazoline or N,N-dimethylacrylamide is grafted to silicone; copolymers with alkyl acrylate (1 to 18 carbon atoms) or ethylene copolymerized with a monomer having a carboxyl group such as acrylic acid and methacrylic acid, a monomer having an epoxy group such as glycidyl methacrylate, a monomer having an amide group such as N,N-dimethylacrylamide, or the like; and shock-absorbing agents such as acrylic rubber and natural rubber latex.

The support material may contain other components in a range where the effects of the present embodiment are not deteriorated. Examples of other components include polyester resins other than the water-soluble polyester resin; plasticizers such as benzoic acid polyalkylene glycol diester, and fillers such as glass spheres, black lead, carbon black, carbon fibers, glass fibers, talc, wollastonite, mica, alumina, silica, kaolin, whiskers, and silicon carbide.

[Effluent]

The effluent is generated when a precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling. The support material is dissolved and/or dispersed in the effluent.

From the viewpoint of making the water-soluble polyester resin dissolved and/or dispersed in the effluent easily precipitate, the total amount of the support material dissolved in the effluent before addition of the metal salt and the support material dispersed therein is preferably 0.1 part by mass or more, more preferably 0.5 part by mass or more, further preferably 1.0 part by mass or more, even more preferably 1.5 parts by mass or more, and even more preferably 2.0 parts by mass or more; and is preferably 20 parts by mass or less, more preferably 15 parts by mass or less, further preferably 10 parts by mass or less, even more preferably 7 parts by mass or less, even more preferably 5 parts by mass or less, and even more preferably 4 parts by mass or less to 100 parts by mass of the aqueous cleaning agent.

The total amount of the support material dissolved in the effluent before addition of the metal salt and the support material dispersed therein can be obtained from the amount of the support material used to prepare the precursor of the three-dimensional object and the amount of the aqueous cleaning agent used to remove the support material from the precursor of the three-dimensional object. If the aqueous cleaning agent is substantially neutral water, the solid matter obtained by drying the effluent in which the support material is dissolved and/or dispersed corresponds to the support material. Therefore, the amount of the support material dissolved in the effluent before addition of the metal salt can be obtained from the amount of the solid matter.

From the viewpoint of making the water-soluble polyester resin dissolved and/or dispersed in the effluent easily precipitate, the total amount of the water-soluble polyester resin dissolved in the effluent before addition of the metal salt and the water-soluble polyester resin dispersed therein is preferably 0.1 part by mass or more, more preferably 0.5 part by mass or more, further preferably 1.0 part by mass or more, even more preferably 1.5 parts by mass or more, and even more preferably 2.0 parts by mass or more; and is preferably 20 parts by mass or less, more preferably 15 parts by mass or less, further preferably 10 parts by mass or less, even more preferably 7 parts by mass or less, even more preferably 5 parts by mass or less, and even more preferably 4 parts by mass or less to 100 parts by mass of the aqueous cleaning agent.

The total amount of the water-soluble polyester resin dissolved in the effluent before addition of the metal salt and the water-soluble polyester resin dispersed therein can be obtained from the amount of the water-soluble polyester resin in the support material used to prepare the precursor of the three-dimensional object and the amount of the aqueous cleaning agent used to remove the support material from the precursor of the three-dimensional object. If the aqueous cleaning agent is substantially neutral water, the solid matter obtained by drying the effluent in which the support material is dissolved and/or dispersed corresponds to the support material. Therefore, the content of the water-soluble polyester resin in the support material dissolved in the effluent before addition of the metal salt can be obtained from the amount of the solid matter.

[Aqueous cleaning agent]

The aqueous cleaning agent is not particularly limited as long as the aqueous cleaning agent can dissolve the support material and remove the support material from the precursor of the three-dimensional object. Examples of the aqueous cleaning agent include neutral water having a pH of 6 to 8 and a mixture obtained by adding additives such as one or more surfactants of an anionic surfactant, a cationic surfactant, a nonionic surfactant, and an amphoteric surfactant, a water-soluble solvent, and an alkali to neutral water. However, neutral water is preferable from an economic viewpoint. Examples of the neutral water include ion exchange water, pure water, tap water, and industrial water; however, ion exchange water and tap water are preferable from an economic viewpoint.

[Metal salt addition step]

The metal salt addition step is a step of adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more.

[Metal salt]

From the viewpoint of safety of the effluent, the metal salt is preferably at least one metal salt selected from the group consisting of a calcium salt, a magnesium salt, a sodium salt, a potassium salt, an aluminum salt, and an iron salt, and is more preferably a calcium salt.

From the viewpoint of easy disposal, the calcium salt is preferably at least one calcium salt selected from the group consisting of calcium chloride and calcium sulfate, and is more preferably calcium chloride.

From the viewpoint of easy disposal, the magnesium salt is preferably at least one magnesium salt selected from the group consisting of magnesium chloride and magnesium sulfate; and is more preferably magnesium chloride.

From the viewpoint of easy disposal, the sodium salt is preferably at least one sodium salt selected from the group consisting of sodium chloride, sodium hydrogen carbonate, sodium carbonate, and sodium sulfate; and is more preferably calcium chloride.

From the viewpoint of easy disposal, the potassium salt is preferably at least one potassium salt selected from the group consisting of potassium chloride and potassium sulfate, and is more preferably calcium chloride.

From the viewpoint of easy disposal, the aluminum salt is preferably at least one aluminum salt selected from the group consisting of aluminum chloride and aluminum sulfate, and is more preferably aluminum sulfate.

From the viewpoint of easy disposal, the iron salt is preferably at least one iron salt selected from the group consisting of iron (II) chloride, iron (III) chloride, and iron (II) sulfate.

From the viewpoint of easy availability, the metal salt is preferably calcium chloride.

From the viewpoint of the recoverability of the water-soluble polyester resin, the solubility of the metal salt in water is 1 g/100 $cm^3$ or more at 20°C.

From the viewpoint of making the water-soluble polyester resin dissolved and/or dispersed in the effluent easily precipitate, the solubility is 1 g/100 $cm^3$ or more, more preferably 5 g/100 $cm^3$ or more, further preferably 10 g/100 $cm^3$ or more, even more preferably 20 g/100 $cm^3$ or more, even more preferably 50 g/100 $cm^3$ or more, and even more preferably 70 g/100 $cm^3$ or more.

From the viewpoint of making the water-soluble polyester resin dissolved and/or dispersed in the effluent easily precipitate, the amount of the metal salt added in the metal salt addition step when the metal salt is at least one metal salt selected from the group consisting of a calcium salt, a magnesium salt, an aluminum salt, and an iron salt is 5 parts by mass or more, preferably 10 parts by mass or more, more preferably 20 parts by mass or more, further preferably 30 parts by mass or more, and even more preferably 40 parts by mass or more to 100 parts by mass of the water-soluble polyester resin dissolved and/or dispersed in the effluent.

From the economic viewpoint, the amount of the metal salt added in the metal salt addition step when the metal salt is at least one metal salt selected from the group consisting of a calcium salt, a magnesium salt, an aluminum salt, and an iron salt is 1,000 parts by mass or less, preferably 700 parts by mass or less, more preferably 500 parts by mass or less, further preferably 350 parts by mass or less, even more preferably 200 parts by mass or less, even more preferably 100 parts by mass or less, and even more preferably 70 parts by mass or less to 100 parts by mass of the water-soluble polyester resin dissolved and/or dispersed in the effluent.

From the viewpoint of making the water-soluble polyester resin dissolved and/or dispersed in the effluent easily precipitate, the amount of the metal salt added in the metal salt addition step when the metal salt is at least one metal salt selected from the group consisting of a sodium salt and a potassium salt is 100 parts by mass or more, preferably 150 parts by mass or more, more preferably 200 parts by mass or more, further preferably 300 parts by mass or more, and even more preferably 350 parts by mass or more to 100 parts by mass of the water-soluble polyester resin dissolved and/or dispersed in the effluent.

From the economic viewpoint, the amount of the metal salt added in the metal salt addition step when the metal salt is at least one metal salt selected from the group consisting of a sodium salt and a potassium salt is 1,000 parts by mass or less, preferably 700 parts by mass or less, and more preferably 500 parts by mass or less to 100 parts by mass of the water-soluble polyester resin dissolved and/or dispersed in the effluent.

From the viewpoint of making the water-soluble polyester resin easily precipitate, the metal salt is preferably added with the effluent being stirred in the metal salt addition step.

[Water-soluble polyester resin precipitation step]

The water-soluble polyester resin precipitation step is a step of subjecting the effluent containing the metal salt to a heat treatment at 30°C or more after the metal salt addition step to precipitate a water-soluble polyester resin.

From the viewpoint of making the water-soluble polyester resin dissolved and/or dispersed in the effluent easily precipitate, the temperature when subjecting the effluent containing the metal salt to a heat treatment is 30°C or higher, preferably 40°C or higher, more preferably 45°C or higher, and further preferably 50°C or higher. From the viewpoint of preventing an adverse effect on the water-soluble polyester resin dissolved and/or dispersed in the effluent, the temperature when subjecting the effluent containing the metal salt to a heat treatment is preferably 100°C or lower, more preferably 80°C or lower, further preferably 75°C or lower, and even more preferably 70°C or lower.

From the viewpoint of making the water-soluble polyester resin dissolved and/or dispersed in the effluent easily precipitate, the time for subjecting the effluent containing the metal salt to a heat treatment is preferably 1 minute or longer, more preferably 5 minutes or longer, and further preferably 10 minutes or longer; and from the viewpoints of productivity and economy, the time is preferably 3 hours or shorter, more preferably 2 hours or shorter, further preferably 1 hour or shorter, and even more preferably 30 minutes or shorter.

In the water-soluble polyester resin precipitation step, the heating means for heating the effluent containing the metal salt is not particularly limited, and a generally known heating method can be used.

In the water-soluble polyester resin precipitation step, mixing is preferably performed by stirring the effluent containing the metal salt from the viewpoint of making the water-soluble polyester resin easily precipitate.

[Water-soluble polyester resin recovery step]

The water-soluble polyester resin recovery step is a step of separating and recovering the precipitated water-soluble polyester resin from the effluent after the water-soluble polyester resin precipitation step.

In the water-soluble polyester resin recovery step, the method of separating and recovering the precipitated water-soluble polyester resin from the effluent is not particularly limited and a known method can be used; however, from the viewpoints of separation accuracy and simplicity, at least one method of centrifugal separation, filtration, and decantation is preferable, and filtration is more preferable. Examples of the filtration include normal pressure filtration using filter paper, filter cloth, or the like; filtration under normal pressure using a filter press, a pressure filter paper type filtration machine, a leaf filter, a rotary press, or the like; and filtration under reduced pressure using a rotating drum type continuous filtration machine or a vacuum filter; however, filtration under reduced pressure is preferable from the viewpoint of simplicity.

From the viewpoint of preventing clogging of piping, the recovery rate in the water-soluble polyester resin recovery step is preferably 60% or more, more preferably 70% or more, further preferably 80% or more, even more preferably 90% or more, and even more preferably 100% or more. The recovery rate is measured by the method described in the examples.

<System for recovering water-soluble polyester resin>

The system for recovering a water-soluble polyester resin of the present embodiment is a system for recovering a water-soluble polyester resin contained in a support material from an effluent in which the support material is dissolved and/or dispersed that is generated when a precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling. The recovery system of the present embodiment includes a metal salt addition means for adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more; a water-soluble polyester resin precipitation means for subjecting the effluent to which the metal salt is added by the metal salt addition means to a heat treatment at 30°C or more to precipitate a water-soluble polyester resin; and a water-soluble polyester resin recovery means for separating and recovering the water-soluble polyester resin precipitated by the water-soluble polyester resin precipitation means from the effluent. The amount of the metal salt added by the metal salt addition means is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added by the metal salt addition means is 100 parts by mass or more and 1,000 parts by mass or less to 100 parts by mass of the water-soluble polyester resin dissolved and/or dispersed in the effluent when the metal salt is at least one metal salt selected from the group consisting of a sodium salt and a potassium salt, wherein the water-soluble polyester resin has an aromatic dicarboxylic acid monomer unit A with a sulfonate group, and the content of the sulfonate group in the water-soluble polyester resin is 0.5 mmol/g or more.

According to the system for recovering a water-soluble polyester resin of the present embodiment, the water-soluble polyester resin can be safely recovered from an effluent generated in a manufacturing process of a three-dimensional object by fused deposition modeling using a material for a support material containing a water-soluble polyester resin and having excellent moisture absorption resistance, and the environmental load can be reduced.

[Support material and water-soluble polyester resin]

The support material and the water-soluble polyester resin in the recovery system of the present embodiment are same as the support material and the water-soluble polyester resin in the method for recovering a water-soluble polyester resin.

[Effluent]

The effluent in the recovery system of the present embodiment is same as the effluent in the method for recovering a water-soluble polyester resin.

[Aqueous cleaning agent]

The aqueous cleaning agent in the recovery system of the present embodiment is same as the aqueous cleaning agent in the method for recovering a water-soluble polyester resin.

[Metal salt addition means]

The metal salt addition means is a means for adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more based on the amount of the water-soluble polyester resin in the effluent. The metal salt and the amount of the metal salt added are the same as those in the method for recovering a water-soluble polyester resin.

[Water-soluble polyester resin precipitation means]

The water-soluble polyester resin precipitation means is a means for subjecting the effluent containing the metal salt to a heat treatment at 30°C or more to precipitate a water-soluble polyester resin. The heating temperature and the treatment time in the water-soluble polyester resin precipitation means are the same as those in the water-soluble polyester resin precipitation step of the method for recovering a water-soluble polyester resin.

[Water-soluble polyester resin recovery means]

The water-soluble polyester resin recovery means is a means for separating and recovering the water-soluble polyester resin precipitated by the water-soluble polyester resin precipitation means from the effluent. The water-soluble polyester resin recovery means is the same as the method used in the water-soluble polyester resin recovery step of the method for recovering a water-soluble polyester resin.

EXAMPLES

<Preparation of water-soluble polyester resin>

[Analysis method]

[Dicarboxylic acid and diol compositions in water-soluble polyester resin]

The compositions of the dicarboxylic acid monomer unit and the diol monomer unit were obtained by proton NMR measurement using NMR MR400 manufactured by Agilent Technologies.

[Amount of sulfonate group in water-soluble polyester resin]

The amount (mmol/g) of the sulfonate group in the polyester was calculated from the composition of the isophthalate group monomer unit obtained above according to the following formula. The number of moles of the whole dicarboxylic acid monomer units and the number of moles of the whole diol monomer units were assumed to be equal.

$$\text{Amount of sulfonate group (mmol/g)} = A \times 1000/(A \times (M_S + M_O) + (100 - A) \times (M_C + M_O) - 2 \times 18.0 \times 100)$$

- A: Rate (mol%) of isophthalate group monomer unit in the whole dicarboxylic acid monomer units
- $M_S$: Molecular weight of sulfoisophthalate (free dicarboxylic acid type)
- $M_O$: Molecular weight of diol (number average molecular weight if there are multiple types of diols)
- $M_C$: Molecular weight of dicarboxylic acids other than isophthalate group (number average molecular weight if there are multiple types of dicarboxylic acids)

[Molecular weight and molecular weight distribution of water-soluble polyester resin]

Using gel permeation chromatography (GPC) under the following conditions, a calibration curve was produced from standard polystyrene to obtain a weight average molecular weight (Mw).

(Measurement conditions)

- Machine: HLC-8320 GPC (Tosoh Corporation, detector integrated type)
- Column: $\alpha$-M $\times$ 2 (manufactured by Tosoh Corporation, 7.8 mm I.D. $\times$ 30 cm)
- Eluent: 60 mmol/L Phosphoric acid + 50 mmol/L brominated lithium/dimethylformamide solution
- Flow rate: 1.0 mL/min
- Column temperature: 40°C
- Detector: RI detector
- Standard: Polystyrene

[Glass transition temperature of water-soluble polyester resin]

Using a pressing machine (Labo Press P2-30T manufactured by Toyo Seiki Seisaku-sho, Ltd.), a sample was pressed at a temperature of 200°C and a pressure of 20 MPa for 2 minutes and rapidly cooled to form a sheet having a thickness of 0.4 mm. From the sheet, 5 to 10 mg of a sample was cut out with scissors, precisely weighed, and sealed in an aluminum pan. Using a DSC machine (DSC7020 manufactured by Seiko Instruments Inc.), the temperature of the aluminum pan was increased from 30°C to 250°C at 10°C/min, rapidly cooled to 30°C, and was increased again to 250°C at 10°C/min to obtain a DSC curve. The glass transition temperature (°C) was obtained from the DSC curve.

[Synthesis of water-soluble polyester resin]

In a 1-L stainless steel separable flask (with a Claisen head, a stirrer, and a nitrogen introducing pipe), 194 g of dimethyl terephthalate, 186 g of ethylene glycol, and 0.455 g of titanium tetraisopropoxide were charged, the temperature was increased, and transesterification was performed by heating for 2 hours at normal pressure under a nitrogen atmosphere at a bath temperature of 210°C. The mixture was cooled to 90°C, and 80.7 g of sodium dimethyl 5-sulfoisophthalate was added. The temperature was increased, and the reaction was performed at 190°C to 210°C and a normal pressure for 2 hours. Then, polycondensation was performed by heating at 200°C/2 kPa to 240°C/200 Pa for 2.5 hours and 235°C/270 Pa to 245°C/12 Pa for 2.5 hours to obtain a water-soluble polyester resin 1 that was a white solid (at room temperature) and served as a main component of the support material.

The composition of each of the dicarboxylic acid and the diol, the amount of the sulfonate group, the weight average molecular weight, and the glass transition temperature were obtained for the water-soluble polyester resin 1. The rate of the 5-slufoisophthalic acid monomer unit in the whole dicarboxylic acid monomer units was 21 mol%, the rate of the terephthalic acid monomer unit in the whole dicarboxylic acid monomer units was 79 mol%, the rate of the ethylene glycol monomer unit in the whole diol monomer units was 67 mol%, and the rate of the diethylene glycol monomer unit in the whole diol monomer units was 33 mol%. The amount of the sulfonate group in the polyester was 0.86 mmol/g, the weight average molecular weight was 34,000, and the glass transition temperature was 69°C.

<Examples and comparative examples>

[Performance evaluation method]

[Method for evaluating filterability]

In a process of filtering out the aggregated water-soluble polyester resin under reduced pressure (degree of pressure reduction: -0.1 MPa, Buchner funnel: 70 mm, filter: Filter paper No. 5C/70 mm manufactured by Advantech Corporation) in the following examples, the time until the filtration completed was measured as the evaluation of the filterability.

[Method for evaluating recovery rate of water-soluble polyester resin]

In the above examples, the dry mass of the recovered water-soluble polyester resin was measured, and the recovery rate of the water-soluble polyester resin was calculated according to the following formula.

$$\text{Recovery rate (\%) of water-soluble polyester resin} = \text{Mass of recovered water-soluble polyester resin/Mass of water-soluble polyester resin before dissolution} \times 100$$

[Examples 1 to 18 and Comparative Examples 1 to 10]

The water-soluble polyester resin 1 was ground with a coffee mill (Mini Blender manufactured by Osaka Chemical Co., Ltd.) (the grinding time was 120 seconds) into a polymer powder. The amount of the polymer powder in mass ratio in Table 1 was dispersed in 10 g of ion exchange water. The dispersion was heated in a water bath at 70°C for 10 minutes to dissolve the polymer powder, and cooled to room temperature to give a model effluent in which the water-soluble polyester resin contained in the support material was dissolved. The amount of the metal salt in mass ratio in Table 1 was added to the effluent, and the obtained aqueous solution or aqueous dispersion was heated in a water bath at the heating temperature shown in Table 1 for 5 minutes. Then, the aggregated water-soluble polyester resin was filtered out (Filter paper No. 5C/70 mm manufactured by Advantech Corporation) under reduced pressure, washed with a small amount of ion exchange water, and dried. The evaluation results of the filterability and the recovery rate of the water-soluble polyester resin are shown in Table 1. A recovery rate of the water-soluble polyester resin exceeding 100% in Table 1 means that the mass of the metal salt bonded to the water-soluble polyester resin is included in the mass of the recovered water-soluble polyester resin.

[Table 1]

| | Example | | | | | | | | | | | | | | | | | | | Comparative Example | | | | | | | | | |
|---|---|---|---|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 1 | 2 | 3 | 4 | 5 | 6 | 7 | 8 | 9 | 10 |
| Solvent (parts by mass): Water (g) | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Support Material (parts by mass): Water-Soluble Polyester Resin 1 (g) | 1.0 | 1.0 | 2.5 | 2.5 | 2.5 | 2.5 | 5.0 | 2.5 | 2.5 | 2.5 | 2.5 | 2.5 | 2.5 | 2.5 | 2.5 | 2.5 | 2.5 | 2.5 | | 2.5 | 2.5 | 2.5 | 2.5 | 2.5 | 2.5 | 2.5 | 2.5 | 2.5 | 2.5 |
| Support Material Composition | | | | | | | | | | | | | | | | | | | 2.5 | | | | | | | | | | |
| Metal Salt (Solubility: g/100 cm³) (parts by mass): CaCl₂ (74.5 g) | 0.2 | 0.5 | 0.3 | 0.5 | 1.0 | 10.0 | 4.0 | 1.0 | 1.0 | | | | | | | | | | 2.0 | 0.1 | | | | | | | | | |
| MgCl₂ (54.3 g) | | | | | | | | | | 1.0 | | | | | | | | | | | | | | | | | | | |
| MgSO₄ (25.5 g) | | | | | | | | | | | 5.0 | 10.0 | | | | | | | | | | | | | | | | | |
| Al₂(SO₄)₃ (87 g) | | | | | | | | | | | | | 1.0 | 4.0 | 10.0 | | | | | | | | | | | | | | |
| NaCl (35.9 g) | | | | | | | | | | | | | | | | 5.0 | | | | | 1.0 | 2.0 | | | | | | | |
| KCl (34 g) | | | | | | | | | | | | | | | | | 10.0 | | | | | | 1.0 | | | | | | |
| NaHCO₃ (10.3 g) | | | | | | | | | | | | | | | | | | 10.0 | | | | | | 1.0 | | | | | |
| Na₂CO₃ (22 g) | | | | | | | | | | | | | | | | | | | | | | | | | 1.0 | | | | |
| CaCO₃ (0.0015 g) | | | | | | | | | | | | | | | | | | | | | | | | | | 1.0 | 10.0 | | |
| Ca(OH)₂ (0.17 g) | | | | | | | | | | | | | | | | | | | | | | | | | | | | 1.0 | 10.0 |
| Ratio: (Metal Salt: parts by mass) / (Water-Soluble Polyester Resin: parts by mass) | 20 | 50 | 10 | 20 | 40 | 400 | 80 | 40 | 40 | 40 | 200 | 400 | 40 | 160 | 400 | 200 | 400 | 400 | 80 | 4 | 40 | 80 | 40 | 40 | 40 | 40 | 400 | 40 | 400 |
| Recovery Condition: Heating Temperature | 50 | 50 | 50 | 50 | 50 | 50 | 50 | 30 | 40 | 50 | 50 | 50 | 50 | 50 | 50 | 50 | 50 | 50 | 50 | 50 | 50 | 50 | 50 | 50 | 50 | 50 | 50 | 50 | 50 |
| Recovery Result: Filtering Time (seconds) | 18 | 10 | 18 | 15 | 10 | 10 | 18 | 50 | 30 | 10 | 50 | 45 | 10 | 120 | 25 | 10 | 20 | 20 | 10 | Aggregation No | Aggregation No | Aggregation No | Aggregation No | Aggregation No | Aggregation No | Aggregation No | Aggregation No | Aggregation No | Aggregation No |
| Recovery Rate (%) of Water-Soluble Polyester Resin | 100 | 100 | 80 | 88 | 104 | 136 | 96 | 96 | 104 | 104 | 68 | 84 | 100 | 112 | 116 | 92 | 120 | 100 | 104 | Aggregation No | Aggregation No | Aggregation No | Aggregation No | Aggregation No | Aggregation No | Aggregation No | Aggregation No | Aggregation No | Aggregation No |

[Example 19]

Example 19 was performed in the same way as the above-described examples except that a composition of the support material, which is obtained by kneading (kneading temperature: 180°C, kneading time: 10 minutes, 90 rpm) 100 parts by mass of the water-soluble polyester resin 1 and 20 parts by mass of KURARITY LA4285 (thermoplastic elastomer constituted from methyl methacrylate and butyl acrylate manufactured by Kuraray Co., Ltd.) using Labo Plastomill 30C150 manufactured by Toyo Seiki Seisaku-sho, Ltd., was used instead of the water-soluble polyester resin 1.

[Example 20]

An ABS resin is used as a molding material, and the water-soluble polyester resin 1 is used as a support material. To an effluent generated in a step of soaking a precursor of a three-dimensional object obtained by feeding the molding material and the support material to a fused deposition modeling type 3D printer in neutral water, and dissolving and removing the support material, 50 parts by mass of calcium chloride to 100 parts by mass of the water-soluble polyester resin in the effluent is added to the effluent. Then, the effluent is heated to 50°C, and the produced aggregate is separated by filtration to recover the water-soluble polyester resin as the aggregate from the effluent.

**Claims**

1. A method for recovering a water-soluble polyester resin contained in a support material from an effluent in which the support material is dissolved and/or dispersed that is generated when a precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling, comprising:

   a metal salt addition step of adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 cm$^3$ or more;
   a water-soluble polyester resin precipitation step of subjecting the effluent containing the metal salt to a heat treatment at 30°C or more after the metal salt addition step to precipitate a water-soluble polyester resin; and
   a water-soluble polyester resin recovery step of separating and recovering the precipitated water-soluble polyester resin from the effluent after the water-soluble polyester resin precipitation step, wherein
   the amount of the metal salt added in the metal salt addition step is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added in the metal salt addition step is 100 parts by mass or more and 1, 000 parts by mass or less to 100 parts by mass of the water-soluble polyester resin dissolved and/or dispersed in the effluent when the metal salt is at least one metal salt selected from the group consisting of a sodium salt and a potassium salt,
   wherein the water-soluble polyester resin has an aromatic dicarboxylic acid monomer unit A with a sulfonate group, and the content of the sulfonate group in the water-soluble polyester resin is 0.5 mmol/g or more.

2. The method for recovering a water-soluble polyester resin according to claim 1, wherein the water-soluble polyester resin has an aromatic dicarboxylic acid monomer unit A with a sulfonate group, a dicarboxylic acid monomer unit B without a sulfonate group, and a diol monomer unit, and the rate of the aromatic dicarboxylic acid monomer unit A in the total amount of all dicarboxylic acid monomer units is 10 mol% or more and 50 mol% or less.

3. The method for recovering a water-soluble polyester resin according to claim 1 or 2, wherein the rate of the aromatic dicarboxylic acid monomer unit A in the total amount of all dicarboxylic acid monomer units in the water-soluble polyester resin is 15 mol% or more and 40 mol% or less.

4. The method for recovering a water-soluble polyester resin according to any one of claims 1 to 3, wherein the total amount of the water-soluble polyester resin dissolved in the effluent before addition of the metal salt and the water-soluble polyester resin dispersed therein is 0.1 part by mass or more and 20 parts by mass or less to 100 parts by mass of the aqueous cleaning agent.

5. The method for recovering a water-soluble polyester resin according to any one of claims 1 to 4, wherein an aromatic dicarboxylic acid A for deriving the aromatic dicarboxylic acid monomer unit A is at least one aromatic dicarboxylic acid selected from the group consisting of 5-sulfoisophthalic acid and 2-sulfoterephthalic acid.

6. The method for recovering a water-soluble polyester resin according to any one of claims 2 to 5, wherein a dicarboxylic acid B for deriving the dicarboxylic acid monomer unit B contains at least one dicarboxylic acid selected from the group consisting of an aromatic dicarboxylic acid and an alicyclic dicarboxylic acid.

7. The method for recovering a water-soluble polyester resin according to any one of claims 2 to 6, wherein a dicarboxylic acid B for deriving the dicarboxylic acid monomer unit B contains at least one dicarboxylic acid selected from an aromatic dicarboxylic acid.

8. The method for recovering a water-soluble polyester resin according to any one of claims 2 to 7, wherein a diol C for deriving the diol monomer unit is an aliphatic diol.

9. The method for recovering a water-soluble polyester resin according to any one of claims 1 to 8, wherein the content of the sulfonate group in the water-soluble polyester resin is 0.5 mmol/g or more and 3 mmol/g or less.

10. The method for recovering a water-soluble polyester resin according to any one of claims 1 to 9, wherein the total amount of the support material dissolved in the effluent before addition of the metal salt and the support material dispersed therein is 0.1 part by mass or more and 20 parts by mass or less to 100 parts by mass of the aqueous cleaning agent.

11. The method for recovering a water-soluble polyester resin according to any one of claims 1 to 10, wherein the aqueous cleaning agent is neutral water having a pH of 6 to 8, or neutral water to which at least one additive selected from the group consisting of a surfactant, a water-soluble solvent, and an alkali is added.

12. The method for recovering a water-soluble polyester resin according to any one of claims 1 to 11, wherein the metal salt is a calcium salt.

13. The method for recovering a water-soluble polyester resin according to any one of claims 1 to 12, wherein the calcium salt is at least one calcium salt selected from the group consisting of calcium chloride and calcium sulfate.

14. A system for recovering a water-soluble polyester resin contained in a support material from an effluent in which the support material is dissolved and/or dispersed that is generated when a precursor of a three-dimensional object containing a three-dimensional object and a support material is brought into contact with an aqueous cleaning agent to remove the support material from the precursor of a three-dimensional object in a manufacturing process of a three-dimensional object by fused deposition modeling, comprising:

a metal salt addition means for adding, to the effluent, at least one metal salt selected from the group consisting of a calcium salt, a magnesium salt, a sodium salt, a potassium salt, an aluminum salt, and an iron salt and selected from the group consisting of metal salts having a solubility in water of 1 g/100 $cm^3$ or more;
a water-soluble polyester resin precipitation means for subjecting the effluent to which the metal salt is added by the metal salt addition means to a heat treatment at 30°C or more to precipitate a water-soluble polyester resin; and
a water-soluble polyester resin recovery means for separating and recovering the water-soluble polyester resin precipitated by the water-soluble polyester resin precipitation means from the effluent, wherein
the amount of the metal salt added by the metal salt addition means is 5 parts by mass or more and 1,000 parts by mass or less to 100 parts by mass of the water-soluble polyester resin dissolved and/or dispersed in the effluent when the metal salt is at least one metal salt selected from the group consisting of a calcium salt, a magnesium salt, an aluminum salt, and an iron salt; and the amount of the metal salt added by the metal salt addition means is 100 parts by mass or more and 1, 000 parts by mass or less to 100 parts by mass of the water-soluble polyester resin dissolved and/or dispersed in the effluent when the metal salt is at least one metal salt selected from the group consisting of a sodium salt and a potassium salt,
wherein the water-soluble polyester resin has an aromatic dicarboxylic acid monomer unit A with a sulfonate group, and the content of the sulfonate group in the water-soluble polyester resin is 0.5 mmol/g or more.

**Patentansprüche**

1. Verfahren zur Rückgewinnung von in einem Trägermaterial enthaltenem wasserlöslichen Polyesterharz aus Abfluss, in dem das Trägermaterial gelöst und/oder dispergiert ist und der erzeugt wird, wenn ein Vorläufer eines dreidimensionalen Objekts, der ein dreidimensionales Objekt und Trägermaterial enthält, mit einem wässrigen Reinigungsmittel in Kontakt gebracht wird, so dass das Trägermaterial vom Vorläufer eines dreidimensionalen Objekts in einem Verfahren zur Fertigung eines dreidimensionalen Objekts durch Schmelzschichtung (fused deposition modeling) entfernt wird, umfassend:

    einen Metallsalzzugabeschritt, bei dem mindestens ein Metallsalz, ausgewählt aus der Gruppe, bestehend aus einem Calciumsalz, einem Magnesiumsalz, einem Natriumsalz, einem Kaliumsalz, einem Aluminiumsalz und einem Eisensalz, und ausgewählt aus der Gruppe, bestehend aus Metallsalzen mit einer Löslichkeit in Wasser von 1 g/100 cm$^3$ oder mehr, zum Abfluss zugegeben wird;
    einen Schritt der Präzipitation von wasserlöslichem Polyesterharz, bei dem der metallsalzhaltige Abfluss einer Wärmebehandlung bei 30°C oder mehr nach dem Metallsalzzugabeschritt unterworfen wird, so dass ein wasserlösliches Polyesterharz präzipitiert wird; und
    einen Schritt der Rückgewinnung von wasserlöslichem Polyesterharz, bei dem das präzipitierte wasserlösliche Polyesterharz vom Abfluss nach dem Schritt der Präzipitation von wasserlöslichem Polyesterharz getrennt und zurückgewonnen wird, wobei
    die Menge an Metallsalz, die im Metallsalzzugabeschritt zugegeben wird, 5 Masseteile oder mehr und 1.000 Masseteile oder weniger bezogen auf 100 Masseteile des im Abfluss gelösten und/oder dispergierten wasserlöslichen Polyesterharzes beträgt, wenn das Metallsalz mindestens ein Metallsalz ist, ausgewählt aus der Gruppe, bestehend aus Calciumsalz, einem Magnesiumsalz, einem Aluminiumsalz und einem Eisensalz; und die Menge des Metallsalzes, die im Metallsalzzugabeschritt zugegeben wird, 100 Masseteile oder mehr und 1.000 Masseteile oder weniger bezogen auf 100 Masseteile des im Abfluss gelösten und/oder dispergierten wasserlöslichen Polyesterharzes beträgt, wenn das Metallsalz mindestens ein Metallsalz ist, ausgewählt aus der Gruppe, bestehend aus einem Natriumsalz und einem Kaliumsalz, wobei das wasserlösliche Polyesterharz eine aromatische Dicarbonsäuremonomereinheit A mit Sulfonatgruppe aufweist und der Sulfonatgruppengehalt im wasserlöslichen Polyesterharz 0,5 mmol/g oder mehr beträgt.

2. Verfahren zur Rückgewinnung von wasserlöslichem Polyesterharz gemäß Anspruch 1, wobei das wasserlösliche Polyesterharz eine aromatische Dicarbonsäuremonomereinheit A mit Sulfonatgruppe, eine Dicarbonsäuremonomereinheit B ohne Sulfonatgruppe und eine Diolmonomereinheit aufweist und der Anteil der aromatischen Dicarbonsäurmonomereinheit A in der Gesamtmenge aller Dicarbonsäuremonomereinheiten 10 mol-% oder mehr und 50 mol-% oder weniger beträgt.

3. Verfahren zur Rückgewinnung von wasserlöslichem Polyesterharz gemäß Anspruch 1 oder 2, wobei der Anteil der aromatischen Dicarbonsäuremonomereinheit A in der Gesamtmenge aller Dicarbonsäuremonomereinheiten im wasserlöslichen Polyesterharz 15 mol-% oder mehr und 40 mol-% oder weniger beträgt.

4. Verfahren zur Rückgewinnung von wasserlöslichem Polyesterharz gemäß einem der Ansprüche 1 bis 3, wobei die Gesamtmenge des im Abfluss vor Zugabe des Metallsalzes gelöst wasserlöslichen Polyesterharzes und des darin dispergierten wasserlöslichen Polyesterharzes 0,1 Masseteile oder mehr und 20 Masseteile oder weniger, bezogen auf 100 Masseteile des wässrigen Reinigungsmittels, beträgt.

5. Verfahren zur Rückgewinnung von wasserlöslichem Polyesterharz gemäß einem der Ansprüche 1 bis 4, wobei eine aromatische Dicarbonsäure A, aus der die aromatische Dicarbonsäuremonomereinheit A abgeleitet werden kann, mindestens eine aromatische Dicarbonsäure, ausgewählt aus der Gruppe, bestehend aus 5-Sulfoisophthalsäure und 2-Sulfoterephthalsäure, ist.

6. Verfahren zur Rückgewinnung von wasserlöslichem Polyesterharz gemäß einem der Ansprüche 2 bis 5, wobei eine Dicarbonsäure B, von der die Carbonsäuremonomereinheit B abgeleitet werden kann, mindestens eine Dicarbonsäure, ausgewählt aus der Gruppe, bestehend aus einer aromatischen Dicarbonsäure und einer alicyclischen Dicarbonsäure, enthält.

7. Verfahren zur Rückgewinnung von wasserlöslichem Polyesterharz gemäß einem der Ansprüche 2 bis 6, wobei eine Dicarbonsäure B, von der die Dicarbonsäuremonomereinheit B abgeleitet werden kann, mindestens eine Dicarbonsäure, ausgewählt aus einer aromatischen Dicarbonsäure, enthält.

8. Verfahren zur Rückgewinnung von wasserlöslichem Polyesterharz gemäß einem der Ansprüche 2 bis 7, wobei ein Diol C, von dem die Diolmonomereinheit abgeleitet werden kann, ein aliphatisches Diol ist.

9. Verfahren zur Rückgewinnung von wasserlöslichem Polyesterharz gemäß einem der Ansprüche 1 bis 8, wobei der Sulfonatgruppengehalt im wasserlöslichen Polyesterharz 0,5 mmol/g oder mehr und 3 mmol/g oder weniger beträgt.

10. Verfahren zur Rückgewinnung von wasserlöslichem Polyesterharz gemäß einem der Ansprüche 1 bis 9, wobei die Gesamtmenge des im Abfluss vor Zugabe des Metallsalzes gelösten Trägermaterials und des darin dispergierten Trägermaterials 0,1 Masseteile oder mehr und 20 Masseteile oder weniger, bezogen auf 100 Masseteile des wässrigen Reinigungsmittels, beträgt.

11. Verfahren zur Rückgewinnung von wasserlöslichem Polyesterharz gemäß einem der Ansprüche 1 bis 10, wobei das wässrige Reinigungsmittel neutrales Wasser mit einem pH von 6 bis 8 ist oder neutrales Wasser ist, zu dem mindestens ein Zusatzstoff, ausgewählt aus der Gruppe, bestehend aus einem Tensid, einem wasserlöslichen Lösungsmittel und einer Alkalie, zugesetzt ist.

12. Verfahren zur Rückgewinnung von wasserlöslichem Polyesterharz gemäß einem der Ansprüche 1 bis 11, wobei das Metallsalz ein Calciumsalz ist.

13. Verfahren zur Rückgewinnung von wasserlöslichem Polyesterharz gemäß einem der Ansprüche 1 bis 12, wobei das Calciumsalz mindestens ein Calciumsalz ist, ausgewählt aus der Gruppe, bestehend aus Calciumchlorid und Calciumsulfat.

14. System zur Rückgewinnung von in einem Trägermaterial enthaltenem wasserlöslichen Polyesterharz aus Abfluss, in dem das Trägermaterial gelöst und/oder dispergiert ist und der erzeugt wird, wenn ein Vorläufer eines dreidimensionalen Objekts, der ein dreidimensionales Objekt und Trägermaterial enthält, mit einem wässrigen Reinigungsmittel in Kontakt gebracht wird, so dass das Trägermaterial vom Vorläufer eines dreidimensionalen Objekts in einem Verfahren zur Fertigung eines dreidimensionalen Objekts durch Schmelzschichtung (fused deposition modeling) entfernt wird, umfassend:

   ein Metallsalzzugabemittel zum Zugeben mindestens eines Metallsalzes, ausgewählt aus der Gruppe, bestehend aus einem Calciumsalz, einem Magnesiumsalz, einem Natriumsalz, einem Kaliumsalz, einem Aluminiumsalz und einem Eisensalz, und ausgewählt aus der Gruppe, bestehend aus Metallsalzen mit einer Löslichkeit in Wasser von 1 g/100 cm$^3$ oder mehr, zum Abfluss;
   ein Mittel zur Präzipitation von wasserlöslichem Polyesterharz zum Unterwerfen des metallsalzhaltigen Abflusses einer Wärmebehandlung bei 30°C oder mehr, so dass ein wasserlösliches Polyesterharz präzipitiert wird; und
   ein Mittel zur Rückgewinnung von wasserlöslichem Polyesterharz zum Trennen und Zurückgewinnen des durch das Mittel zur Präzipitation von wasserlöslichem Polyesterharz präzipitierten wasserlöslichen Polyesterharzes, wobei
   die Menge an Metallsalz, die durch das Metallsalzzugabemittel zugegeben wird, 5 Masseteile oder mehr und 1.000 Masseteile oder weniger bezogen auf 100 Masseteile des im Abfluss gelösten und/oder dispergierten wasserlöslichen Polyesterharzes beträgt, wenn das Metallsalz mindestens ein Metallsalz ist, ausgewählt aus der Gruppe, bestehend aus Calciumsalz, einem Magnesiumsalz, einem Aluminiumsalz und einem Eisensalz; und die Menge des Metallsalzes, die durch das Metallsalzzugabemittel zugegeben wird, 100 Masseteile oder mehr und 1.000 Masseteile oder weniger bezogen auf 100 Masseteile des im Abfluss gelösten und/oder dispergierten wasserlöslichen Polyesterharzes beträgt, wenn das Metallsalz mindestens ein Metallsalz ist, ausgewählt aus der Gruppe, bestehend aus einem Natriumsalz und einem Kaliumsalz,
   wobei das wasserlösliche Polyesterharz eine aromatische Dicarbonsäuremonomereinheit A mit Sulfonatgruppe aufweist und der Sulfonatgruppengehalt im wasserlöslichen Polyesterharz 0,5 mmol/g oder mehr beträgt.

**Revendications**

1. Procédé de récupération d'une résine de polyester hydrosoluble contenue dans un matériau de support à partir d'un effluent dans lequel le matériau de support est dissous et/ou dispersé qui est généré lorsqu'un précurseur d'un objet tridimensionnel contenant un objet tridimensionnel et un matériau de support est mis en contact avec un agent de nettoyage aqueux pour retirer le matériau de support du précurseur d'un objet tridimensionnel dans un processus de fabrication d'un objet tridimensionnel par modélisation par dépôt en fusion, comprenant :

une étape d'ajout de sel métallique consistant à ajouter, à l'effluent, au moins un sel métallique choisi dans le groupe consistant en un sel de calcium, un sel de magnésium, un sel de sodium, un sel de potassium, un sel d'aluminium et un sel de fer et choisi dans le groupe consistant en des sels métalliques présentant une solubilité dans l'eau de 1 g/100 cm$^3$ ou plus ;

une étape de précipitation de résine de polyester hydrosoluble consistant à soumettre l'effluent contenant le sel métallique à un traitement thermique à 30 °C ou plus après l'étape d'ajout de sel métallique consistant à précipiter une résine de polyester hydrosoluble ; et

une étape de récupération de résine de polyester hydrosoluble consistant à séparer et à récupérer la résine de polyester hydrosoluble précipitée à partir de l'effluent après l'étape de précipitation de résine de polyester hydrosoluble, dans lequel

la quantité du sel métallique ajoutée dans l'étape d'ajout de sel métallique est 5 parties en masse ou plus et 1 000 parties en masse ou moins sur 100 parties en masse de la résine de polyester hydrosoluble dissoute et/ou dispersée dans l'effluent lorsque le sel métallique est au moins un sel métallique choisi dans le groupe consistant en un sel de calcium, un sel de magnésium, un sel d'aluminium, et un sel de fer ; et la quantité du sel métallique ajoutée dans l'étape d'ajout de sel métallique est 100 parties en masse ou plus et 1 000 parties en masse ou moins sur 100 parties en masse de la résine de polyester hydrosoluble dissoute et/ou dispersée dans l'effluent lorsque le sel métallique est au moins un sel métallique choisi dans le groupe consistant en un sel de sodium et un sel de potassium,

dans lequel la résine de polyester hydrosoluble présente une unité monomère d'acide dicarboxylique aromatique A avec un groupement sulfonate, et la teneur du groupement sulfonate dans la résine de polyester hydrosoluble est de 0,5 mmol/g ou plus.

2. Procédé de récupération d'une résine de polyester hydrosoluble selon la revendication 1, dans lequel la résine de polyester hydrosoluble présente une unité monomère d'acide dicarboxylique aromatique A avec un groupement sulfonate, une unité monomère d'acide dicarboxylique aromatique B sans un groupement sulfonate, et une unité monomère de diol, et le taux de l'unité monomère d'acide dicarboxylique aromatique A dans la quantité totale de toutes les unités monomères d'acide dicarboxylique est de 10 % en moles ou plus et 50 % en moles ou moins.

3. Procédé de récupération d'une résine de polyester hydrosoluble selon la revendication 1 ou 2, dans lequel le taux de l'unité monomère d'acide dicarboxylique aromatique A dans la quantité totale de toutes les unités monomères d'acide dicarboxylique dans la résine de polyester hydrosoluble est de 15 % en moles ou plus et 40 % en moles ou moins.

4. Procédé de récupération d'une résine de polyester hydrosoluble selon l'une quelconque des revendications 1 à 3, dans lequel la quantité totale de la résine de polyester hydrosoluble dissoute dans l'effluent avant l'ajout du sel métallique et de la résine de polyester hydrosoluble dispersée dans celui-ci est de 0,1 partie en masse ou plus et 20 parties en masse ou moins sur 100 parties en masse de l'agent de nettoyage aqueux.

5. Procédé de récupération d'une résine de polyester hydrosoluble selon l'une quelconque des revendications 1 à 4, dans lequel un acide dicarboxylique aromatique A pour dériver l'unité monomère d'acide dicarboxylique aromatique A est au moins un acide dicarboxylique aromatique choisi dans le groupe consistant en acide 5-sulfoisophtalique et acide 2-sulfotéréphtalique.

6. Procédé de récupération d'une résine de polyester hydrosoluble selon l'une quelconque des revendications 2 à 5, dans lequel un acide dicarboxylique B pour dériver l'unité monomère d'acide dicarboxylique B contient au moins un acide dicarboxylique choisi dans le groupe consistant en un acide dicarboxylique aromatique et un acide dicarboxylique alicyclique.

7. Procédé de récupération d'une résine de polyester hydrosoluble selon l'une quelconque des revendications 2 à 6, dans lequel un acide dicarboxylique B pour dériver l'unité monomère d'acide dicarboxylique B contient au moins un acide dicarboxylique choisi dans un acide dicarboxylique aromatique.

8. Procédé de récupération d'une résine de polyester hydrosoluble selon l'une quelconque des revendications 2 à 7, dans lequel un diol C pour dériver l'unité monomère de diol est un diol aliphatique.

9. Procédé de récupération d'une résine de polyester hydrosoluble selon l'une quelconque des revendications 1 à 8, dans lequel la teneur du groupement sulfonate dans la résine de polyester hydrosoluble est de 0,5 mmol/g ou plus et 3 mmol/g ou moins.

10. Procédé de récupération d'une résine de polyester hydrosoluble selon l'une quelconque des revendications 1 à 9, dans lequel la quantité totale du matériau de support dissous dans l'effluent avant l'ajout du sel métallique et du matériau de support dispersé dans celui-ci est de 0,1 partie en masse ou plus et 20 parties en masse ou moins sur 100 parties en masse de l'agent de nettoyage aqueux.

11. Procédé de récupération d'une résine de polyester hydrosoluble selon l'une quelconque des revendications 1 à 10, dans lequel l'agent de nettoyage aqueux est une eau neutre présentant un pH de 6 à 8, ou une eau neutre à laquelle au moins un additif choisi dans le groupe consistant en un tensioactif, un solvant hydrosoluble, et un alcalin est ajouté.

12. Procédé de récupération d'une résine de polyester hydrosoluble selon l'une quelconque des revendications 1 à 11, dans lequel le sel métallique est un sel de calcium.

13. Procédé de récupération d'une résine de polyester hydrosoluble selon l'une quelconque des revendications 1 à 12, dans lequel le sel de calcium est au moins un sel de calcium choisi dans le groupe consistant en un chlorure de calcium et un sulfate de calcium.

14. Système de récupération d'une résine de polyester hydrosoluble contenue dans un matériau de support à partir d'un effluent dans lequel le matériau de support est dissous et/ou dispersé qui est généré lorsqu'un précurseur d'un objet tridimensionnel contenant un objet tridimensionnel et un matériau de support est mis en contact avec un agent de nettoyage aqueux pour retirer le matériau de support du précurseur d'un objet tridimensionnel dans un processus de fabrication d'un objet tridimensionnel par modélisation par dépôt en fusion, comprenant :

une étape d'ajout de sel métallique pour ajouter, à l'effluent, au moins un sel métallique dans le groupe consistant en un sel de calcium, un sel de magnésium, un sel de sodium, un sel de potassium, un sel d'aluminium, et un sel de fer et choisi dans le groupe consistant en des sels métalliques présentant une solubilité dans l'eau de 1 g/100 cm$^3$ ou plus ;
un moyen de précipitation de résine de polyester hydrosoluble pour soumettre l'effluent auquel le sel métallique est ajouté par le moyen d'ajout de sel métallique à un traitement thermique à 30 °C ou plus pour précipiter une résine de polyester hydrosoluble ; et
un moyen de récupération de résine de polyester hydrosoluble pour séparer et récupérer la résine de polyester hydrosoluble précipitée par le moyen de précipitation de résine de polyester hydrosoluble à partir de l'effluent, dans lequel
la quantité de sel métallique ajoutée par le moyen d'ajout de sel métallique est 5 parties en masse ou plus et 1 000 parties en masse ou moins sur 100 parties en masse de la résine de polyester hydrosoluble dissoute et/ou dispersée dans l'effluent lorsque le sel métallique est au moins un sel métallique choisi dans le groupe consistant en un sel de calcium, un sel de magnésium, un sel d'aluminium, et un sel de fer ; et la quantité du sel métallique ajoutée par le moyen d'ajout de sel métallique est 100 parties en masse ou plus et 1 000 parties en masse ou moins sur 100 parties en masse de la résine de polyester hydrosoluble dissoute et/ou dispersée dans l'effluent lorsque le sel métallique est au moins un sel métallique choisi dans le groupe consistant en un sel de sodium et un sel de potassium,
dans lequel la résine de polyester hydrosoluble présente une unité monomère d'acide dicarboxylique aromatique A avec un groupement sulfonate, et la teneur du groupement sulfonate dans la résine de polyester hydrosoluble est de 0,5 mmol/g ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002516346 T
- JP 2008507619 T
- WO 2015070165 A1
- JP 2014083744 A
- JP 2014504971 A
- JP 2011143615 A
- JP H01502244 A
- JP 2011050815 A